# EUROPEAN PATENT APPLICATION

(11) **EP 4 502 981 A1**
(43) Date of publication of application: **05.02.2025**
(21) Application number: 22935142.4
(22) Date of filing: 29.03.2022
(51) Int. Cl.: G08G 1/16

(54) **APPARATUS FOR CONTROLLING MOBILE BODY AND METHOD FOR CONTROLLING MOBILE BODY**

(71) Applicant: HONDA MOTOR CO., LTD., Minato-ku Tokyo 107-8556 (JP)
(72) Inventor: MATSUNAGA Hideki, Wako-shi, Saitama 351-0193 (JP); MATSUMOTO Takashi, Wako-shi, Saitama 351-0193 (JP); WAKAYAMA Ryoji, Wako-shi, Saitama 351-0193 (JP); AIZAWA Koki, Wako-shi, Saitama 351-0193 (JP); SHIRAKATA Kento, Wako-shi, Saitama 351-0193 (JP); KURAMITSU Yunosuke, Wako-shi, Saitama 351-0193 (JP)
(74) Representative: Weickmann & Weickmann PartmbB
(86) International application number: PCT/JP2022/015453
(87) International publication number: WO 2023/187991

(57) **Abstract**

A control device for a mobile object is a control device for a mobile object that one or more occupants board and that is able to move both on a roadway and in a predetermined area other than a roadway. The control device includes: a road type recognizing unit configured to recognize whether the mobile object is moving on the roadway or in the predetermined area on the basis of an output of a sensing device for sensing an external situation of the mobile object; a limitation recognizing unit configured to recognize the roadway on which the mobile object is moving is a limitation area in which movement of a vehicle in a first direction is permitted and movement of a vehicle in a second direction opposite to the first direction on the basis of the output of the sensing device; and a control unit configured to limit a speed of the mobile object to a first speed when the mobile object moves on the roadway, the roadway is the limitation area, and the mobile object is moving in the first direction and to limit the speed of the mobile object to a second speed lower than the first speed when the mobile object moves on the roadway, the roadway is the limitation area, and the mobile object is moving in the second direction.

## Description

### [Technical Problem]

The present invention relates to a control device for a mobile object and a control method for a mobile object.

### [Background Art]

In the related art, a traveling support device for a motor-driven vehicle that supports traveling of a motor-driven vehicle is disclosed (for example, see Patent Document 1). The traveling support device for a motor-driven vehicle detects a direction in which the motor-driven vehicle is movable from captured image data of an imaging unit and controls traveling of the motor-driven vehicle on the basis of the detected direction.

### [Citation List]

### [Patent Document]

[Patent Document 1]
Japanese Unexamined Patent Application, First Publication No. 2019-197328

### [Summary of Invention]

### [Technical Problem]

However, since the device does not consider a type of an area in which the motor-driven vehicle moves, movement based on a situation in its surroundings may not be performed.

The present invention was made in consideration of the aforementioned circumstances, and an objective thereof is to provide a control device and a control method with which a mobile object can be caused to move in a mode based on a situation in its surroundings.

### [Solution to Problem]

A control device for a mobile object and a control method for a mobile object according to the present invention employ the following configurations.
(1) A control device for a mobile object according to an aspect of the present invention is a control device for a mobile object that one or more occupants board and that is able to move both on a roadway and in a predetermined area other than a roadway, the control device including: a road type recognizing unit configured to recognize whether the mobile object is moving on the roadway or in the predetermined area on the basis of an output of a sensing device for sensing an external situation of the mobile object; a limitation recognizing unit configured to recognize whether the roadway on which the mobile object is moving is a limitation area in which movement of a vehicle in a first direction is permitted and movement of a vehicle in a second direction opposite to the first direction is limited on the basis of the output of the sensing device; and a control unit configured to limit a speed of the mobile object to a first speed when the mobile object moves on the roadway, the roadway is the limitation area, and the mobile object is moving in the first direction and to limit the speed of the mobile object to a second speed lower than the first speed when the mobile object moves on the roadway, the roadway is the limitation area, and the mobile object is moving in the second direction.
(2) In the aspect of (1), the control unit limits the speed when the mobile object moves on a roadway other than the limitation area to a third speed and limits the speed when the mobile object moves in the predetermined area to a fourth speed lower than the third speed, and the third speed is equal to or higher than the second speed or equal to the first speed.
(3) The control device for a mobile object according to the aspect of (1) or (2) further includes a position information acquiring unit configured to acquire position information of the mobile object, and the limitation recognizing unit recognizes whether the mobile object is moving in the limitation area in the second direction on the basis of the position information and map information including information of the limitation area stored in the storage unit.
(4) In any one of the aspects of (1) to (3), the limitation recognizing unit recognizes whether the mobile object is moving in the limitation area in the second direction on the basis of whether there is a sign or a road marking indicating the limitation area in an area in which the mobile object is moving on the basis of the output of the sensing device.
(5) In any one of the aspects of (1) to (4), the control unit causes a first output unit, which is configured to notify a traffic participant near the mobile object of information, to output information indicating that the mobile object is traveling in a traveling mode in which the mobile object is traveling in the limitation area in the second direction when the mobile object is moving in the second direction.
(6) In any one of the aspects of (1) to (5), the control unit causes a second output unit, which is configured to notify an occupant of the mobile object of information, to output information indicating that the speed of the mobile object is limited to the second speed lower than the first speed when the mobile object is moving in the second direction.
(7) In any one of the aspects of (1) to (6), the control unit releases the limitation of the speed of the mobile object to the second speed lower than the first speed and limits the speed of the mobile object to the first speed when the mobile object moves in the limitation area in the second direction and then the mobile object exits the limitation area or the mobile object enters a state in which the mobile object does not move in the second direction.
(8) In any one of the aspects of (1) to (7), the control unit stops causing the first output unit, which is configured to notify a traffic participant near the mobile object of information, to output information indicating that the mobile object is traveling in a traveling mode in which the mobile object moves in the limitation area in the second direction when the mobile object moves in the limitation area in the second direction and then the mobile object exits the limitation area or the mobile object enters a state in which the mobile object does not move in the second direction.
(9) In any one of the aspects of (1) to (8), the control unit causes a second output unit, which is configured to notify an occupant of the mobile object of information, to output information indicating that limitation to the second speed is released and the speed of the mobile object is limited to the first speed when limitation of the speed of the mobile object to the second speed lower than the first speed is released and the speed of the mobile object is limited to the first speed.
(10) In any one of the aspects of (1) to (9), when limitation of the speed of the mobile object to the second speed lower than the first speed is released and the speed of the mobile object is limited to the first speed, the control unit limits acceleration of the mobile object based on an operation on an operator for operating the speed of the mobile object until a predetermined time elapses after the limitation of the speed of the mobile object to the second speed lower than the first speed has been released even if an occupant of the mobile object operates the operator to accelerate the mobile object at the releasing timing.
(11) A control device for a mobile object according to another aspect of the present invention is a control device for a mobile object that one or more occupants board and that is able to move both on a roadway and in a predetermined area other than a roadway, the control device including: a road type recognizing unit configured to recognize whether the mobile object is moving on the roadway or in the predetermined area on the basis of an output of a sensing device for sensing an external situation of the mobile object; a limitation recognizing unit configured to recognize whether the roadway on which the mobile object is moving is a limitation area in which movement of a vehicle in a first direction is permitted and movement of a vehicle in a second direction opposite to the first direction is limited on the basis of the output of the sensing device; and a control unit configured to control movement of the mobile object on the basis of a recognition result from the road type recognizing unit and a recognition result from the limitation recognizing unit, wherein the control unit causes the mobile object to move in a first moving mode when the mobile object is moving in the predetermined area other than the roadway, to move in a second moving mode different from the first moving mode when the mobile object is moving on a roadway other than the predetermined area, to move in the first moving mode when the mobile object moves on the roadway, the roadway is the limitation area, and the mobile object is moving in the second direction, and to move in the second moving mode when the mobile object moves on the roadway, the roadway is the limitation area, and the mobile object is moving in the first direction.
(12) In any one of the aspects of (1) to (11), a speed limit in the first moving mode is lower than a speed limit in the second moving mode and/or a rate of change of steering per unit time in the first moving mode is less than a rate of change of steering per unit time in the second moving mode.
(13) A control method for a mobile object according to another aspect of the present invention is a control method for a mobile object that one or more occupants board and that is performed by a control device for a mobile object that one or more occupants board and that is able to move both on a roadway and in a predetermined area other than a roadway, the control method including: recognizing whether the mobile object is moving on the roadway or in the predetermined area on the basis of an output of a sensing device for sensing an external situation of the mobile object; recognizing whether the roadway on which the mobile object is moving is a limitation area in which movement of a vehicle in a first direction is permitted and movement of a vehicle in a second direction opposite to the first direction is limited on the basis of the output of the sensing device; limiting a speed of the mobile object to a first speed when the mobile object moves on the roadway, the roadway is the limitation area, and the mobile object is moving in the first direction; and limiting the speed of the mobile object to a second speed lower than the first speed when the mobile object moves on the roadway, the roadway is the limitation area, and the mobile object is moving in the second direction.

### [Advantageous Effects of Invention]

According to the aspects, it is possible to cause a mobile object to move in a mode based on a situation in its surroundings. For example, according to the aspects, it is possible to cause a mobile object to move in a mode based on a type of a road in which the mobile object moves.

### [Brief Description of Drawings]

FIG. 1 is a diagram illustrating an example of a configuration of a mobile object 1 and a control device 100 according to an embodiment.
FIG. 2 is a perspective view of a mobile object 1 when seen from above.
FIG. 3 is a diagram illustrating an example of a situation in which a mobile object 1 is moving on a roadway.
FIG. 4 is a diagram illustrating an example of a situation in which a mobile object is moving in a first direction.
FIG. 5 is a diagram illustrating an example of a situation in which a mobile object is moving in a second direction.
FIG. 6 is a diagram illustrating an example of notification information.
FIG. 7 is a diagram illustrating an example of information which is displayed on a display unit (an occupant output unit) in the mobile object 1.
FIG. 8 is a diagram illustrating an example of information which is provided to an occupant.
FIG. 9 is a flowchart illustrating an example of a process flow that is performed by the control device 100.
FIG. 10 is a diagram illustrating an example of a situation in which a mobile object is moving from a limitation area to a non-limitation area.
FIG. 11 is a diagram illustrating an example of notification information.
FIG. 12 is a flowchart illustrating an example of a process flow that is performed by the control device 100.
FIG. 13 is a diagram illustrating an example of a relationship among a road type, an area, a moving direction of the mobile object 1, a mode, and a speed.

### [Description of Embodiments]

Hereinafter, a control device for a mobile object and a control method for a mobile object according to an embodiment of the present invention will be described with reference to the accompanying drawings.

Hereinafter, a control device for a mobile object and a control method for a mobile object according to an embodiment of the present invention will be described with reference to the accompanying drawings. A mobile object can move both on a roadway and in a predetermined area other than a roadway. The mobile object may also be referred to as micromobility. An electric scooter is a type of micromobility. The mobile object may be a vehicle which an occupant can get in or an autonomous mobile object that can perform autonomous traveling in an unmanned manner. The autonomous mobile object in the latter is used, for example, for transporting luggage or the like. The mobile object may include, for example, micromobility of transporting luggage while traveling in parallel with a walking user or leading a person or may include other mobile objects (for example, a walking robot) that can perform autonomous movement. The predetermined area is, for example, a walkway. The predetermined area may be some or all of a roadside strip, a bicycle lane, and a public open space and may include all of a walkway, a roadside strip, a bicycle lane, and a public open space. In the following description, it is assumed that the predetermined area is a walkway. In the following description, a "walkway" can be appropriately replaced with a "predetermined area."

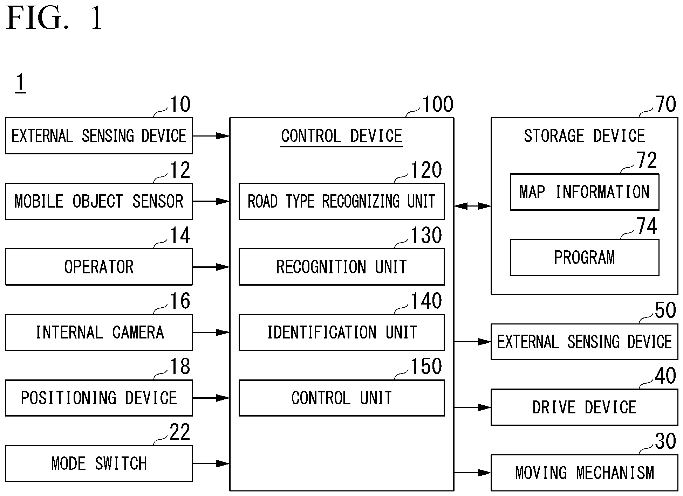

FIG. 1 is a diagram illustrating an example of a configuration of a mobile object 1 and a control device 100 according to an embodiment. The mobile object 1 is provided with, for example, an external sensing device 10, a mobile object sensor 12, an operator 14, an internal camera 16, a positioning device 18, a mode switch 22, a moving mechanism 30, a drive device 40, an external notification device 50, a storage device 70, and a control device 100. Some constituents which are not essential to realizing functions of the present invention out of the constituents may be omitted.

The external sensing device 10 includes various devices that can sense in a traveling direction of the mobile object 1. The external sensing device 10 includes an external camera, a radar device, a LIDAR (Light Detection and Ranging) device, and a sensor fusion device. The external sensing device 10 outputs information indicating sensing results (such as an image and a position of an object) to the control device 100.

The mobile object sensor 12 includes, for example, a speed sensor, an acceleration sensor, a yaw rate (angular velocity) sensor, a direction sensor, and an operation amount sensor attached to the operator 14. The operator 14 includes, for example, an operator for instructing acceleration or deceleration (for example, an accelerator pedal or a brake pedal) and an operator for instructing steering (for example, a steering wheel). In this case, the mobile object sensor 12 may include an accelerator operation amount sensor, a brake operation amount sensor, and a steering torque sensor. The mobile object 1 may include an operator (for example, a rotary operator with a shape other than a ring shape, a joystick, or a button) other than described above as the operator 14.

The internal camera 16 images at least the head of an occupant of the mobile object 1 from the front. The internal camera 16 is a digital camera using an imaging device such as a charge-coupled device (CCD) a complementary metal oxide semiconductor (CMOS). The internal camera 16 outputs the captured image to the control device 100.

The positioning device 18 is a device that measures a position of the mobile object 1. The positioning device 18 is, for example, a global navigation satellite system (GNSS) receiver, identifies the position of the mobile object 1 on the basis of signals received from GNSS satellites, and outputs the identified position as position information. The position information of the mobile object 1 may be estimated from a position of a Wi-Fi base station to which a communication device which will be described later is connected.

The mode switch 22 is a switch that is operated by an occupant. The mode switch 22 may be a mechanical switch or a graphical user interface (GUI) switch that is set on a touch panel. For example, the mode switch 22 receives an operation of switching a driving mode to one of mode A that is an assist mode in which one of a steering operation and acceleration/deceleration control is performed by an occupant and the other thereof is automatically performed and that includes mode A-1 in which the steering operation is performed by an occupant and the acceleration/deceleration control is automatically performed and mode A-2 in which the acceleration/deceleration operation is performed by an occupant and the steering control is automatically performed, mode B that is a manual driving mode in which the steering operation and the acceleration/deceleration operation are performed by an occupant, and mode C that is an automatic driving mode in which the steering control and the acceleration/deceleration control are automatically performed.

The moving mechanism 30 is a mechanism for moving the mobile object 1 on a road. The moving mechanism 30 is, for example, a wheel group including turning wheels and driving wheels. The moving mechanism 30 may be legs for multi-legged walking.

The drive device 40 moves the mobile object 1 by outputting a force to the moving mechanism 30. For example, the drive device 40 includes a motor that drives the driving wheels, a battery that stores electric power to be supplied to the motor, and a steering device that adjusts a steering angle of the turning wheels. The drive device 40 may include an internal combustion engine or a fuel cell as a driving force output means or a power generation means. The drive device 40 may further include a brake device using frictional force or air resistance.

The external notification device 50 is, for example, a lamp, a display device, or a speaker that is provided on an external plate member of the mobile object 1 and is used to notify the outside of the mobile object 1 of information. The external notification device 50 performs different operations in a state in which the mobile object 1 is moving on a walkway and a state in which the mobile object 1 is moving on a roadway. For example, the external notification device 50 is controlled such that the lamp emits light when the mobile object 1 is moving on the walkway and the lamp does not emit light when the mobile object 1 is moving on the roadway. An emission color of the lamp can be a color defined in the law. The external notification device 50 may be controlled such that the lamp emits green light when the mobile object 1 is moving on the walkway and the lamp emits blue light when the mobile object 1 is moving on the roadway. When the external notification device 50 is a display device, the external notification device 50 displays a notification indicating "traveling on a walkway" in text or graphics when the mobile object 1 is traveling on the walkway.

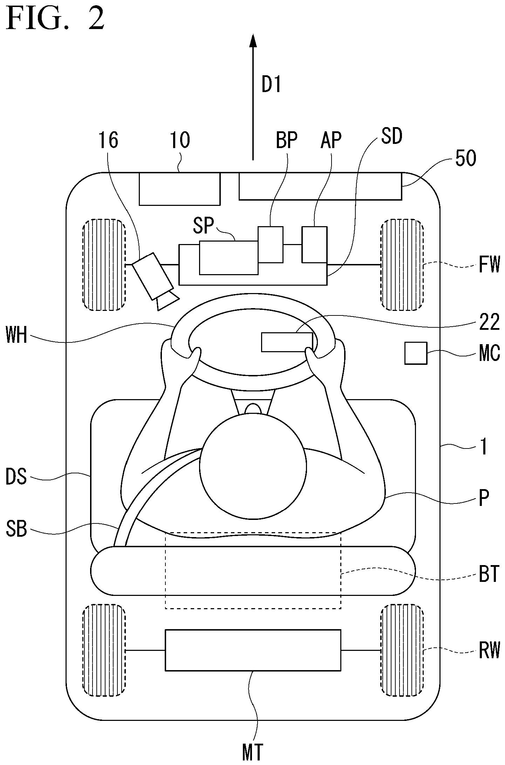

FIG. 2 is a perspective view of a mobile object 1 when seen from above. In the drawing, FW denotes turning wheels, RW denotes driving wheels, SD denotes a steering device, MT denotes a motor, and BT denotes a battery. The steering device SD, the motor MT, and the battery BT are included in the drive device 40. AP denotes an accelerator pedal, BP denotes a brake pedal, WH denotes a steering wheel, SP denotes a speaker, and MC denotes a microphone. The mobile object 1 illustrated in the drawing is a single-seated mobile object, and an occupant P sits on a driver's seat DS and wears a seat belt SB. An arrow D1 is a traveling direction (a speed vector) of the mobile object 1. The external sensing device 10 is installed in the vicinity of the front end of the mobile object 1, the internal camera 16 is installed at a position at which the head of the occupant P can be imaged from the front of the occupant P, and the mode switch 22 is installed in a boss part of the steering wheel WH. The external notification device 50 which is a display device is provided in the vicinity of the front end of the mobile object 1.

Referring back to FIG. 1, the storage device 70 is, for example, a non-transitory storage device such as a hard disk drive (HDD), a flash memory, or a random access memory (RAM). Map information 72, a program 74 that is executed by the control device 100, and the like are stored in the storage device 70. The storage device 70 is located outside of the control device 100 in the drawing, but the storage device 70 may be included in the control device 100. The storage device 70 may be provided in a server which is not illustrated.

### [Control device]

The control device 100 includes, for example, a road type recognizing unit 120, a recognition unit 130, an identification unit 140, and a control unit 150. These constituents are realized, for example, by causing a hardware processor such as a central processing unit (CPU) to execute the program (software) 74. Some or all of these constituents may be realized by hardware (a circuit unit including circuitry) such as a large scale integration (LSI) device, an application-specific integrated circuit (ASIC), a field-programmable gate array (FPGA), or a graphics processing unit (GPU) or may be cooperatively realized by software and hardware. The program may be stored in the storage device 70 in advance or may be stored in a detachable storage medium (a non-transitory storage medium) such as a DVD or a CD-ROM and installed in the storage device 70 by setting the storage medium into a drive device.

The road type recognizing unit 120 recognizes whether the mobile object 1 is moving on a roadway or on a walkway. The road type recognizing unit 120 recognizes whether the mobile object 1 is moving on a roadway or on a walkway, for example, by analyzing an image captured by an external camera of the external sensing device 10. Outputs of the radar device, the LIDAR device, the sensor fusion device, or the like may be auxiliarily used.

The road type recognizing unit 120 recognizes whether the mobile object 1 is moving on a roadway or on a walkway on the basis of a plurality of events indicating that the mobile object 1 is moving on a roadway in an image captured by the external camera. For example, the road type recognizing unit 120 classifies pixels in a frame of an image into classes through semantic segmentation, assigns labels to the classes, and considers a plurality of subareas into which the image is virtually divided and boundaries therebetween. The road type recognizing unit 120 classifies at least an area of an image captured by the external camera into a subarea (hereinafter referred to as a host area) in which the mobile object 1 is present and a subarea (hereinafter referred to as a neighboring area) which is neighboring the host area and in which the mobile object 1 is not present and performs processing thereon.

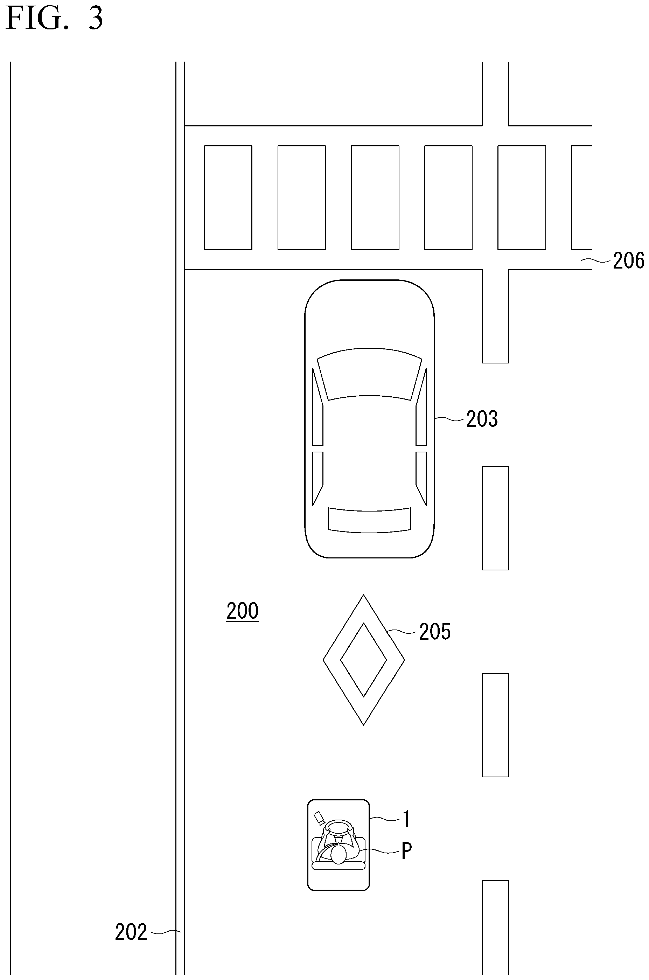

For example, when a predetermined number of events or more out of the following events are included, it may be determined that the mobile object 1 is moving on a roadway. For example, the events include an event in which a stationary obstacle (such as a standing signboard, a mailbox, a utility pole, and a garbage bin) other than a vehicle 203 is not present in the host area 200, an event in which a vehicle 203 is moving in the host area 200, an event in which a road marking 205 is present on the road surface of the host area 200, an event in which a pedestrian crossing 206 is present in the host area 200, and an event in which the host area 200 is located on the lower end of a stepped part 202. FIG. 3 is a diagram illustrating an example of a situation in which a mobile object 1 is moving on a roadway.

The recognition unit 130 recognizes an object present near the mobile object 1 on the basis of an output of the external sensing device 10. The object includes some or all of mobile objects such as a vehicle, a bicycle, and a pedestrian, travel lane boundaries such as lane markings, stepped parts, guardrails, curbstones, and median strips, structures installed on the road such as road signs or signboards, and obstacles such as objects present (fallen) on a travel lane. The recognition unit 130 acquires information such as presence, a position, and a type of another mobile object by inputting an image captured by the external camera to a trained model which has been trained to output information such as presence, a position, and a type of an object when an image captured by the external camera of the external sensing device 10 is input thereto. A type of another mobile object may be estimated on the basis of a size of the mobile object in an image or intensities of reflected waves received by the radar device of the external sensing device 10. The recognition unit 130 acquires, for example, a speed of another mobile object which has been detected using Doppler shift or the like by the radar device.

The recognition unit 130 recognizes a road sign, a road marking drawn on a road, or the like. For example, the recognition unit 130 recognizes a road sign or a road marking indicating one-way traffic and recognizes a direction of the one-way traffic (a direction in which progress is permitted) indicated by the road sign or the road marking. The direction in which progress is permitted may be referred to as a first direction, and a direction opposite to the first direction may be referred to as a second direction. The recognition unit 130 recognizes whether a road is a one-way traffic road, for example, on the basis of information indicated by a road sign or a road marking and recognizes the direction in which progress is permitted when the road is a one-way traffic road.

The identification unit 140 acquires information of a road of the position of the mobile object 1 acquired by the positioning device 18 with reference to the map information 72. For example, the identification unit 140 identifies whether the road of the position is a one-way traffic road and acquires the direction in which progress is permitted when the road is a one-way traffic road.

The control unit 150 controls, for example, the drive device 40 according to a set driving mode. The mobile object 1 may perform only some of the following driving modes, and the control unit 150 sets a speed limit to different values when the mobile object 1 is moving on a roadway and when the mobile object 1 is moving on a walkway. In this case, the mode switch 22 may be omitted.

In mode A-1, the control unit 150 controls the motor MT of the drive device 40 with reference to information of a travel lane and an object based on an output of the recognition unit 130 such that a distance to an object present in front of the mobile object 1 is maintained to be equal to or greater than a predetermined value when the mobile object 1 is moving on a roadway and the mobile object 1 moves at a first speed V1 (for example, a speed equal to or higher than 10 [km/h] and lower than several tens of [km/h]) when the distance to the object present in front of the mobile object 1 is sufficiently long.

The control unit 150 controls the motor MT of the drive device 40 such that a distance to an object present in front of the mobile object 1 is maintained to be equal to or greater than a predetermined value when the mobile object 1 is moving on a walkway and the mobile object 1 moves at a second speed V2 (for example, a speed lower than 10 [km/h]) when the distance to the object present in front of the mobile object 1 is sufficiently long. The relevant function is the same as an adaptive cruise control (ACC) function of a vehicle of which a speed has been set to the first speed V1 or the second speed V2, and a technique used in the ACC can be used. In mode A-1, the control unit 150 controls the steering device SD such that a steering angle of the turning wheels change on the basis of an amount of operation of the operator 14 such as the steering wheel. This function is the same as a function of a power steering device, and a technique used in the power steering device can be used. Instead of using electronic control for steering, the mobile object 1 may include a steering device in which the operator 14 and a steering mechanism are mechanically connected.

In mode A-2, the control unit 150 generates a target trajectory along which the mobile object 1 can move while avoiding an object in a travel lane with reference to information of the travel lane and the object based on the output of the recognition unit 130 and controls the steering device SD of the drive device 40 such that the mobile object 1 moves along the target trajectory. Regarding acceleration and deceleration, the control unit 150 controls the motor MT of the drive device 40 on the basis of a speed of the mobile object 1 and an amount of operation of the accelerator pedal or the brake pedal. The control unit 150 controls the motor MT of the drive device 40 with the first speed V1 as an upper speed limit (which means that the mobile object 1 is not accelerated in spite of an additional acceleration instruction when the mobile object reaches the upper speed limit in mode A-2) when the mobile object 1 is moving on a roadway and controls the drive device 40 with the second speed V2 as the upper speed limit when the mobile object 1 is moving on a walkway.

In mode B, the control unit 150 controls the motor MT of the drive device 40 on the basis of the speed of the mobile object 1 and the amount of operation of the accelerator pedal or the brake pedal. The control unit 150 controls the motor MT of the drive device 40 with the first speed V1 as the upper speed limit (which means that the mobile object 1 is not accelerated in spite of an additional acceleration instruction when the mobile object reaches the upper speed limit in mode B) when the mobile object 1 is moving on a roadway and controls the motor MT of the drive device 40 with the second speed V2 as the upper speed limit when the mobile object 1 is moving on a walkway. Steering is the same as in mode A-1. A mode when the mobile object is moving on a roadway may be referred to as mode B1 (a second movement mode), and a mode when the mobile object is moving on a walkway may be referred to as mode B2 (a first movement mode).

In mode C, the control unit 150 generates a target trajectory along which the mobile object 1 can move while avoiding an object in a travel lane with reference to information of the travel lane and the object based on the output of the recognition unit 130 and controls the drive device 40 such that the mobile object 1 moves along the target trajectory. In mode C, the control unit 150 controls the drive device 40 with the first speed V1 as the upper speed limit when the mobile object 1 is moving on a roadway and controls the drive device 40 with the second speed V2 as the upper speed limit when the mobile object 1 is moving on a walkway.

### [Process when mobile object moves on one-way traffic road]

A process when a mobile object moves on a one-way traffic road will be described below. The control unit 150 limits the speed of the mobile object 1 to the first speed when the mobile object 1 travels on a roadway, the roadway is a limitation area, and a vehicle travels in the first direction, and limits the speed of the mobile object 1 to the second speed lower than the first speed when the mobile object 1 travels on a roadway, the roadway is a limitation area, and a vehicle travels in the second direction. The limitation area is a one-way traffic road (a roadway). The vehicle is, for example, a four-wheel vehicle, a two-wheel vehicle, or a compact car. The limitation area is, for example, an area in which a moving direction of a pedestrian is not limited.

### (Movement in first direction)

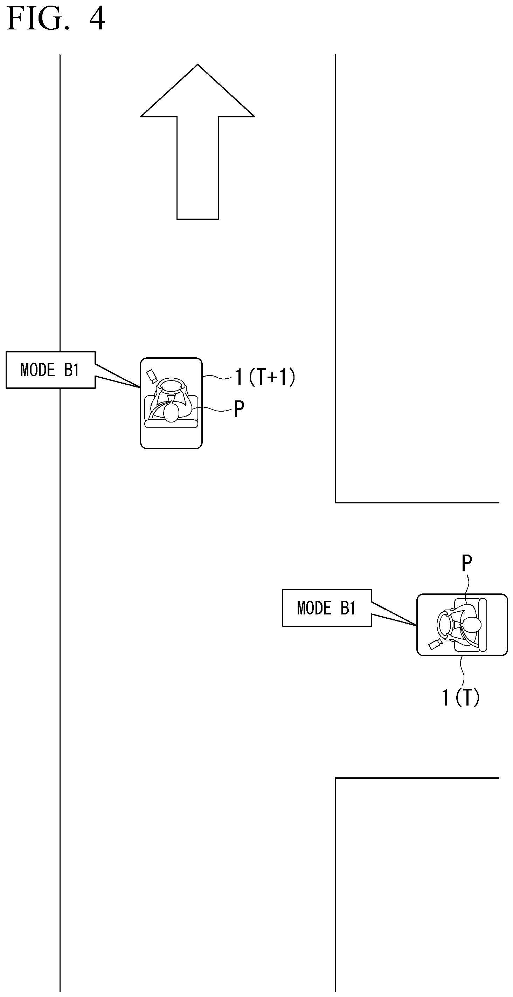

When the mobile object 1 moves in mode B1, enters a limitation area from a non-limitation area, and travels in the limitation area in the first direction, the control unit 150 continues to perform mode B1. FIG. 4 is a diagram illustrating an example of a situation in which the mobile object moves in the first direction. As illustrated in the drawing, the mobile object 1 is going to enter a limitation area from a non-limitation area at time T. When the mobile object 1 enters the limitation area at time T+1 and moves in the limitation area in the first direction, the control unit 150 does not switch the driving mode and moves in mode B1.

### (Movement in second direction)

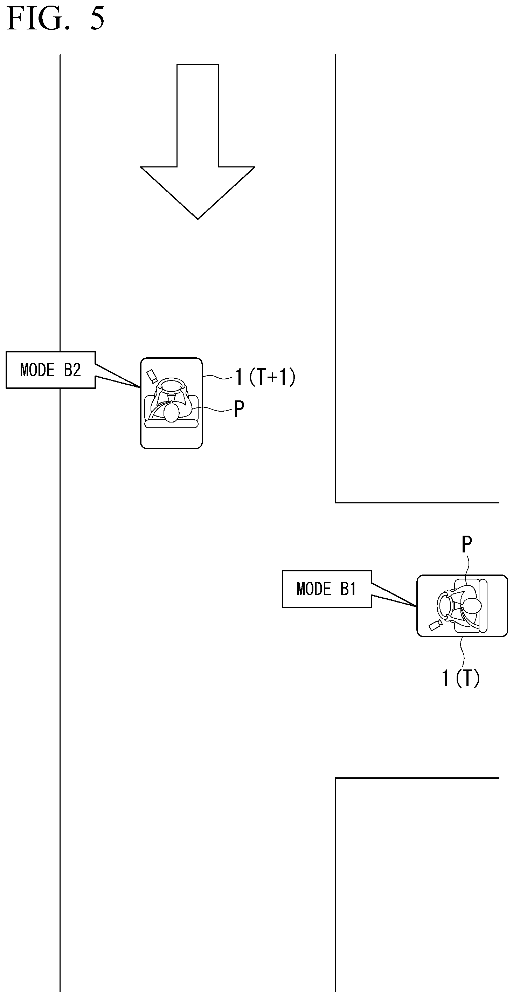

When the mobile object 1 moves in mode B1, enters a limitation area from a non-limitation area, and travels in the limitation area in the second direction, the control unit 150 switches the driving mode from mode B 1 to mode B2. FIG. 5 is a diagram illustrating an example of a situation in which the mobile object moves in the second direction. As illustrated in the drawing, the mobile object 1 is going to enter a limitation area from a non-limitation area at time T. When the mobile object 1 enters the limitation area at time T+1 and moves in the limitation area in the second direction, the control unit 150 switches the driving mode from mode B 1 to mode B2 and moves.

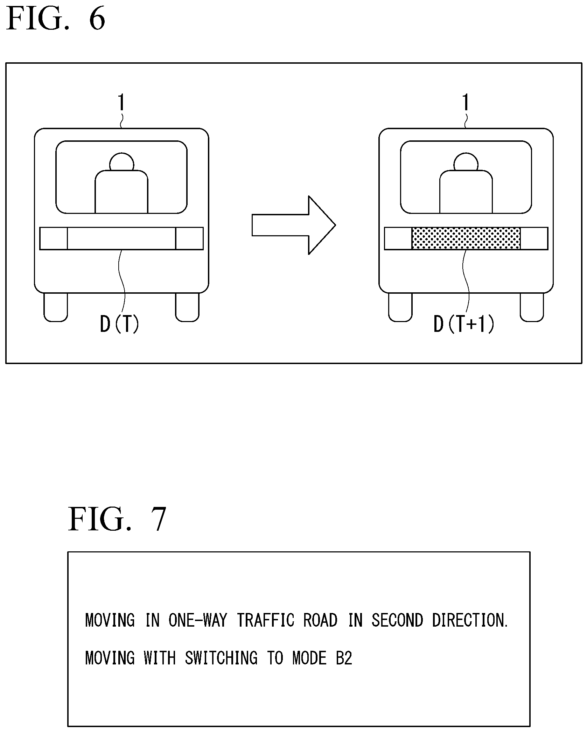

When the mobile object 1 switches the driving mode to mode B2 and moves in the second direction as illustrated in FIG. 5, the mobile object 1 causes an output unit D (a first output unit) of the external notification device 50 to output notification information indicating that the mobile object is moving in mode B2 such that the surroundings are notified of information indicating that the mobile object is moving in mode B2. FIG. 6 is a rear view of the mobile object 1. For example, since the mobile object is moving in mode B1 at time T, the output unit D is not turned on. For example, since the driving mode is switched to mode B2 and the mobile object is moving in mode B2 at time T+1, the output unit D is turned on. The notification information notified to the surroundings is not limited to the aforementioned example, but may be notified of in various modes using sound, text information, and turning-on of a lamp. In the example illustrated in FIG. 6, the rear state of the mobile object 1 is illustrated, but a predetermined output unit on the front side or the lateral side of the mobile object 1 may be turned on when the mobile object moves in the second direction. When the mobile object moves in the limitation area in the second direction, information may be output in the same mode as when the mobile object moves on a walkway or information may be output in another mode.

When the mobile object 1 moves in the limitation area and is moving in the second direction, the control unit 150 may cause an occupant output unit (not illustrated), which is configured to notify an occupant of the mobile object 1 of information, to output information indicating that the speed of the mobile object is limited to the second speed lower than the first speed. The occupant output unit is an example of a "second output unit." FIG. 7 is a diagram illustrating an example of information which is displayed on a display unit (the occupant output unit) in the mobile object 1. Notification information for an occupant in the mobile object 1 is displayed on the display unit. For example, information indicating that the mobile object is moving in mode B2 (at the second speed) for movement in the second direction such as "Moving in a prohibited direction on a one-way traffic road. Moving after switching to mode B2" is provided. The notification information provided to the occupant is not limited to the aforementioned example, but may be provided in various modes using sound, text information, and turning-on of a lamp.

When the mobile object 1 is going to move (is predicted to be moving) in the second direction in the limitation area, information indicating that the mobile object travels in the second direction or information indicating that the driving mode is scheduled to be switched to mode B2 may be provided to an occupant. The prediction includes, for example, a case in which a direction indicator of the mobile object 1 is operated to indicate movement in the second direction and a case in which the mobile object is recognized to move in the second direction unless a direction changes.

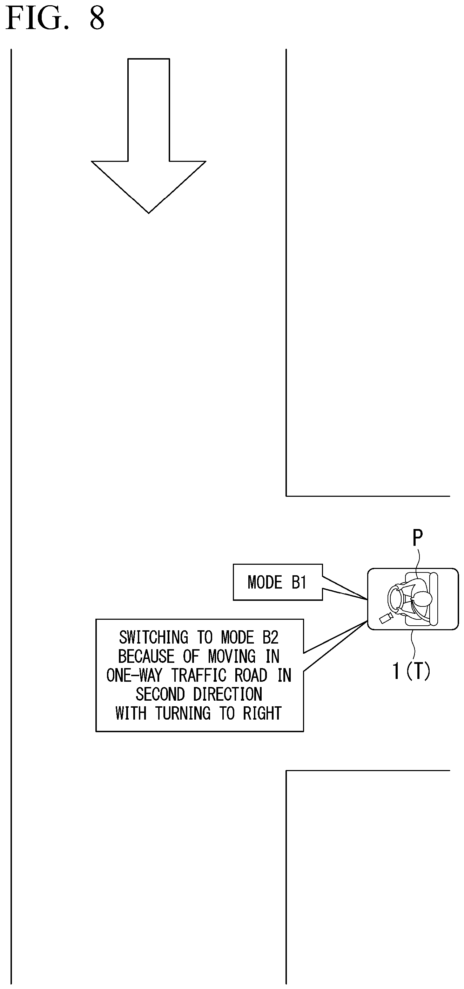

FIG. 8 is a diagram illustrating an example of information which is provided to an occupant. For example, when the mobile object is to travel in the second direction after a right turn or when the mobile object is predicted to turn to right, information indicating switching to mode B2 is provided to an occupant. Accordingly, the occupant can recognize switching to mode B2 in advance.

### [Flowchart]

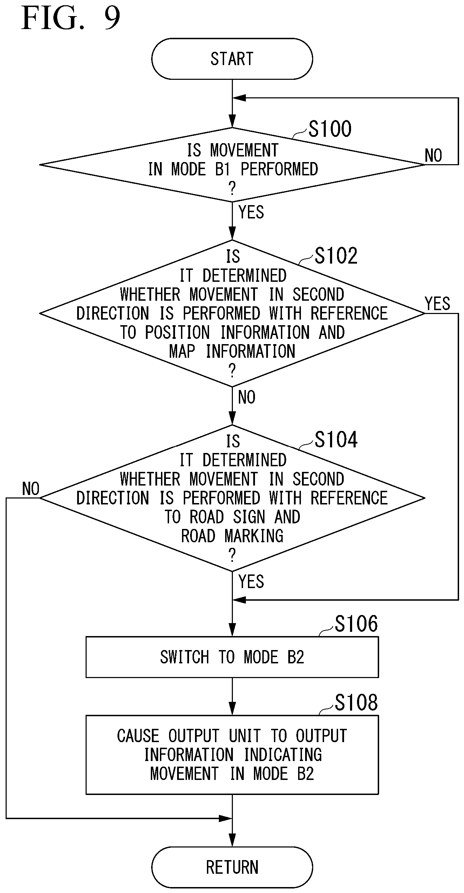

FIG. 9 is a flowchart illustrating an example of a process flow that is performed by the control device 100. First, the control unit 150 determines whether the mobile object 1 is moving in mode B1 (Step S100). When the mobile object 1 is moving in mode B 1, the identification unit 140 determines whether the mobile object is moving in the second direction in a limitation area with reference to the position information of the mobile object 1 and the map information 72 (Step S102). When it is determined that the mobile object is moving in the second direction in the limitation area, the process flow proceeds to Step S106.

When it is determined that the mobile object is not moving in the second direction in the limitation area, the recognition unit 130 determines whether the mobile object is moving in the second direction in the limitation area with reference to information indicated by a road sign or a road marking (Step S104). When it is determined that the mobile object is not moving in the second direction in the limitation area, this routine of the flowchart ends. Since determination is performed using the position information and the information indicated by a road sign or a road marking as described above, one determination process can work even if the other determination process does not work well, and thus it is possible to more accurately perform determination in a limitation area. When the determination results of Steps S102 and S104 are positive, the process flow may proceed to Step S106.

When it is determined that the mobile object is moving in the second direction in the limitation area, the control unit 150 switches from mode B 1 to mode B2 and causes the mobile object 1 to move in the second direction (Step S106). Then, the control unit 150 causes the occupant output unit to output information indicating that the mobile object is moving in mode B2 (Step S108). Accordingly, this routine of the flowchart ends.

For example, when the mobile object 1 is driven by an occupant, the occupant may unconsciously enter a limitation area in the second direction. In this case, maintenance of mode B 1 may not be proper. In this embodiment, by switching the driving mode to mode B2 when the mobile object enters the limitation area in the second direction, it is possible to support the mobile object 1 such that the mobile object can move in a mode based on a situation in its surroundings.

### [Process when moving from one-way traffic road to other road]

When the mobile object 1 moves in the second direction in a limitation area and then the mobile object 1 exits the limitation area or the mobile object 1 enters a state in which the mobile object 1 does not move in the second direction, the control unit 150 releases limitation of the speed of the mobile object 1 to the second speed lower than the first speed and limits the speed of the mobile object to the first speed.

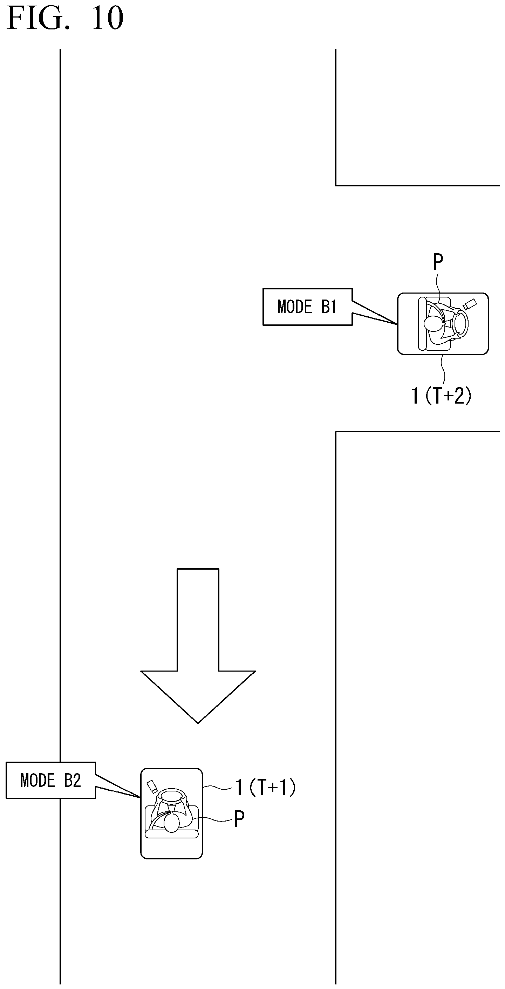

When the mobile object 1 moves in mode B2, moves from a limitation area to a non-limitation area, and moves in the non-limitation area, the control unit 150 switches from mode B2 to mode B1. FIG. 10 is a diagram illustrating an example of a situation in which a mobile object moves from a limitation area to a non-limitation area. As illustrated in the drawing, the mobile object 1 is moving in the second direction in the limitation area at time T+1. When the mobile object 1 moves from the limitation area to a non-limitation area at time T+2 and moves in the limitation area, the mobile object 1 moves after switching from mode B2 to mode B1.

For example, when the mobile object 1 moves in the second direction in a limitation area and then the mobile object 1 exits the limitation area or the mobile object 1 enters a state in which the mobile object 1 does not move in the second direction, the control unit 150 stops outputting information indicating that the mobile object 1 is traveling in a traveling mode in which it travels in the second direction in the limitation area from the external notification device 50 configured to notify a traffic participant near the mobile object 1 of information. When the mobile object 1 moves after switching from mode B2 to mode B1 as illustrated in FIG. 10, the control unit 150 stops outputting notification information to a nearby traffic participant.

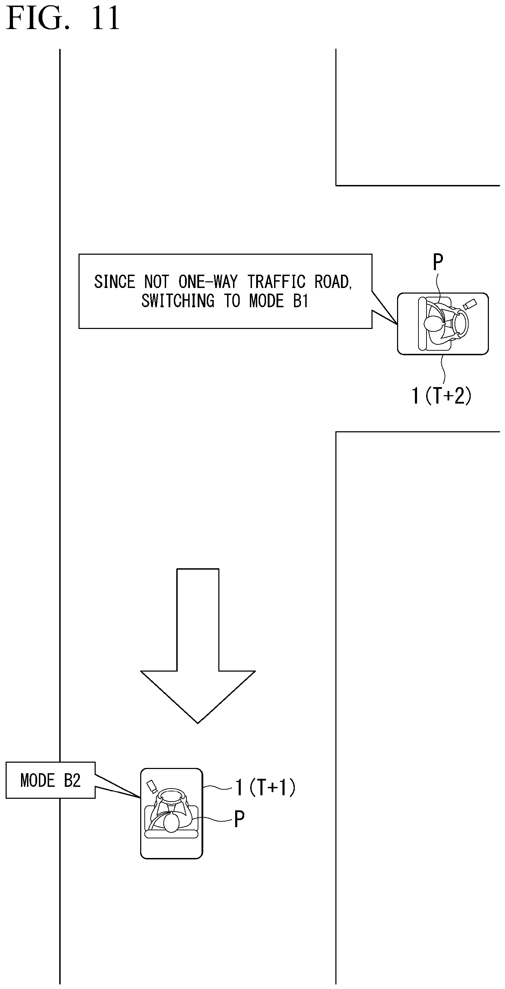

For example, when the control unit 150 releases limitation of the speed of the mobile object 1 to the second speed lower than the first speed and limits the speed of the mobile object to the first speed, the control unit 150 causes the occupant output unit (the second output unit), which is configured to notify an occupant of the mobile object 1 of information, to output information indicating that limitation to the second speed is released and the speed is limited to the first speed. As illustrated in FIG. 11, information indicating switching to mode B1 may be provided to the occupant of the mobile object 1. In this case, when the occupant of the mobile object 1 performs a predetermined operation (when the mode switch 22 is operated or when an operation of pressing a predetermined button or the like is performed), the driving mode may be switched to mode B1.

For example, when the control unit 150 releases limitation of the speed of the mobile object 1 to the second speed lower than the first speed and limits the speed of the mobile object to the first speed, the control unit 150 may limit acceleration of the mobile object 1 based on an operation on the operator until a predetermined time elapses after the limitation of the speed of the mobile object 1 to the second speed lower than the first speed has been released even if the occupant of the mobile object 1 operates the operator for adjusting the speed of the mobile object 1 such that the mobile object 1 is accelerated at the timing of release. Limitation of acceleration means, for example, that a degree of acceleration is curbed. For example, even when the operator is operated such that the mobile object 1 is accelerated at first acceleration at the timing of release, the control unit 150 controls the mobile object 1 such that the mobile object 1 is accelerated at second acceleration lower than the first acceleration. That is, the control unit 150 limits acceleration of the mobile object 1 based on an operation of the operator. For example, the control unit 150 curbs an output of the motor such that the mobile object 1 is accelerated at the second acceleration. Accordingly, even when an occupant performs an operation for acceleration at the time of release of the limitation to the second speed, quick acceleration to the first speed is curbed. As a result, it is possible to improve convenience for an occupant and to realize control in consideration of a nearby traffic participant.

### [Flowchart]

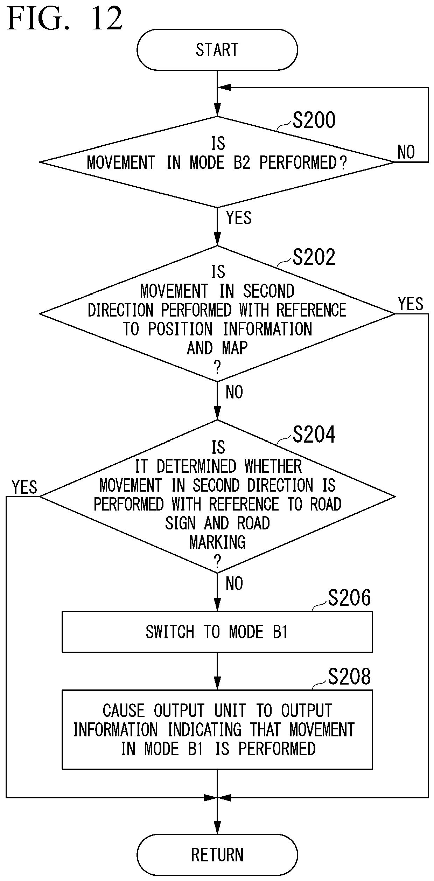

FIG. 12 is a flowchart illustrating an example of a process flow that is performed by the control device 100. First, the control unit 150 determines whether the mobile object 1 is moving in mode B2 (Step S200). When the mobile object is moving in mode B2, the identification unit 140 determines whether the mobile object 1 is moving in the second direction in a limitation area with reference to the position information of the mobile object 1 and the map information 72 (Step S202). When it is determined that the mobile object is moving in the second direction in the limitation area, this routine of the flowchart ends.

When it is determined that the mobile object is not moving in the second direction in the limitation area, the recognition unit 130 determines whether the mobile object is moving in the second direction in the limitation area with reference to information indicated by a road sign or a road marking (Step S204). When it is determined that the mobile object is moving in the second direction in the limitation area, this routine of the flowchart ends.

When it is determined that the mobile object is not moving in the second direction in the limitation area, the control unit 150 causes the mobile object 1 to move with switching from mode B2 to mode B 1 (Step S206). Then, the control unit 150 stops outputting of information indicating that the mobile object is moving in mode B2 from the output unit of the external notification device 50 and causes the output unit of the external notification device 50 to output information indicating that the mobile object is moving in mode B 1 (Step S208). Then, this routine of the flowchart ends.

For example, when the mobile object 1 is operated by an occupant, the mobile object 1 may enter a limitation area in the second direction and then exit the non-limitation area or moves in the first direction in the limitation area. In this case, since mode B2 is automatically switched to mode B 1, the control device 100 can support the mobile object 1 such that the mobile object moves in a mode based on a situation in its surroundings.

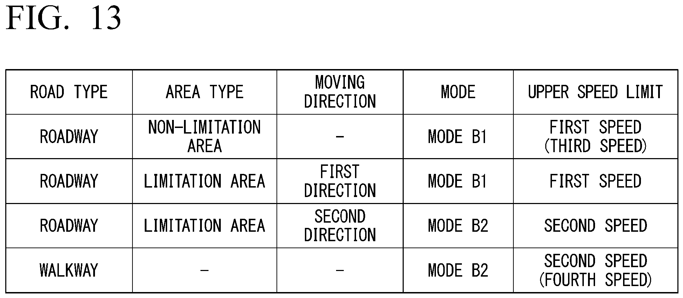

FIG. 13 is a diagram illustrating an example of a relationship among a road type, an area, a moving direction of the mobile object 1, a mode, and a speed. When the mobile object 1 moves on a roadway which is a non-limitation area, movement in mode B 1 is permitted. In mode B 1, an upper speed limit of the mobile object 1 is the first speed (or a third speed). When the mobile object 1 moves in the first direction on a roadway which is a limitation area, movement in mode B 1 is permitted. When the mobile object 1 moves in the second direction on the roadway which is a limitation area, movement in mode B 1 is limited and movement in mode B2 is permitted. In mode B2, the upper speed limit of the mobile object 1 is the second speed (or a fourth speed). When the mobile object 1 moves on a walkway, movement in mode B1 is limited and movement in mode B2 is permitted. The third speed is an upper speed limit when the mobile object 1 moves on a roadway which is not a limitation area. The third speed is, for example, a speed higher than the second speed or equal to the first speed. The fourth speed is an upper speed limit when the mobile object 1 moves in a predetermined area. The fourth speed is, for example, a speed lower than the first speed or equal to the second speed.

A rate of change of steering per unit time in mode B 1 may be set to be less than the rate of change of steering per unit time in mode B2. For example, when the mobile object 1 changes its moving direction, control is performed such that the moving direction in mode B1 is more slowly changed than in mode B2. Accordingly, since the mobile object 1 moves with behavior close to a pedestrian's behavior, it is possible to adapt to the situation in its surroundings.

Control in mode B has been described above, and the speed limit when the mobile object 1 moves in the second direction in a limitation area may be limited in another mode instead (or in addition). For example, in mode A-1, mode A-2, or mode C, the upper speed limit may be limited to the second speed when the mobile object 1 moves in the second direction in a limitation area.

As described above, since the control device 100 changes the mode or the speed limit on the basis of a road type and a type (an area type) of a road, it is possible to allow the mobile object 1 to move in a mode based on the situation in its surroundings. As a result, the mobile object 1 can move in a mode in which the mobile object 1 adapts to a nearby traffic participant.

The aforementioned embodiment can be mentioned as follows:
A control device for a mobile object comprising:
a storage medium storing computer-readable instructions; and
a processor connected to the storage medium,
wherein the processor executes the computer-readable instructions to perform:
   controlling a mobile object that one or more occupants board and that is able to move both on a roadway and in a predetermined area other than a roadway;
   recognizing whether the mobile object is moving on the roadway or in the predetermined area on the basis of an output of a sensing device for sensing an external situation of the mobile object;
   recognizing the roadway on which the mobile object is moving is a limitation area in which movement of a vehicle in a first direction is permitted and movement of a vehicle in a second direction opposite to the first direction on the basis of the output of the sensing device;
   limiting a speed of the mobile object to a first speed when the mobile object moves on the roadway, the roadway is the limitation area, and the mobile object is moving in the first direction; and
   limiting the speed of the mobile object to a second speed lower than the first speed when the mobile object moves on the roadway, the roadway is the limitation area, and the mobile object is moving in the second direction.

While an embodiment of the present invention has been described above, the present invention is not limited to the embodiment and can be subjected to various modifications and substitutions without departing from the gist of the present invention.

### [Reference Signs List]

10 External sensing device
12 Mobile object sensor
14 Operator
16 Internal camera
18 Positioning device
22 Mode switch
30 Moving mechanism
40 Drive mechanism
50 External notification device
70 Storage device
100 Control device
120 Road type recognizing unit
130 Recognition unit
140 Identification unit
150 Control unit

## Claims

1. A control device for a mobile object that is able to move both on a roadway and in a predetermined area other than a roadway, the control device comprising:
a road type recognizing unit configured to recognize whether the mobile object is moving on the roadway or in the predetermined area on the basis of an output of a sensing device for sensing an external situation of the mobile object;
a limitation recognizing unit configured to recognize whether the roadway on which the mobile object is moving is a limitation area in which movement of a vehicle in a first direction is permitted and movement of a vehicle in a second direction opposite to the first direction is limited on the basis of the output of the sensing device; and
a control unit configured to limit a speed of the mobile object to a first speed when the mobile object moves on the roadway, the roadway is the limitation area, and the mobile object is moving in the first direction and to limit the speed of the mobile object to a second speed lower than the first speed when the mobile object moves on the roadway, the roadway is the limitation area, and the mobile object is moving in the second direction.

2. The control device for the mobile object according to claim 1, wherein the control unit limits the speed when the mobile object moves on a roadway other than the limitation area to a third speed and limits the speed when the mobile object moves in the predetermined area to a fourth speed lower than the third speed, and
wherein the third speed is higher than the second speed or equal to the first speed.

3. The control device for the mobile object according to claim 1, further comprising a position information acquiring unit configured to acquire position information of the mobile object,
wherein the limitation recognizing unit recognizes whether the mobile object is moving in the limitation area in the second direction on the basis of the position information and map information including information of the limitation area stored in the storage unit.

4. The control device for the mobile object according to claim 1, wherein the limitation recognizing unit recognizes whether the mobile object is moving in the limitation area in the second direction on the basis of whether there is a sign or a road marking indicating the limitation area in an area in which the mobile object is moving on the basis of the output of the sensing device.

5. The control device for the mobile object according to claim 1, wherein the control unit causes a first output unit, which is configured to notify a traffic participant near the mobile object of information, to output information indicating that the mobile object is traveling in a traveling mode in which the mobile object is traveling in the limitation area in the second direction when the mobile object is moving in the second direction.

6. The control device for the mobile object according to claim 1, wherein the control unit causes a second output unit, which is configured to notify an occupant of the mobile object of information, to output information indicating that the speed of the mobile object is limited to the second speed lower than the first speed when the mobile object is moving in the second direction.

7. The control device for the mobile object according to claim 1, wherein the control unit releases the limitation of the speed of the mobile object to the second speed lower than the first speed and limits the speed of the mobile object to the first speed when the mobile object moves in the limitation area in the second direction and then the mobile object exits the limitation area or the mobile object enters a state in which the mobile object does not move in the second direction.

8. The control device for the mobile object according to claim 5, wherein the control unit stops causing the first output unit, which is configured to notify a traffic participant near the mobile object of information, to output information indicating that the mobile object is traveling in a traveling mode in which the mobile object moves in the limitation area in the second direction when the mobile object moves in the limitation area in the second direction and then the mobile object exits the limitation area or the mobile object enters a state in which the mobile object does not move in the second direction.

9. The control device for the mobile object according to claim 7, wherein the control unit causes a second output unit, which is configured to notify an occupant of the mobile object of information, to output information indicating that limitation to the second speed is released and the speed of the mobile object is limited to the first speed when limitation of the speed of the mobile object to the second speed lower than the first speed is released and the speed of the mobile object is limited to the first speed.

10. The control device for the mobile object according to claim 7, wherein, when limitation of the speed of the mobile object to the second speed lower than the first speed is released and the speed of the mobile object is limited to the first speed, the control unit limits acceleration of the mobile object based on an operation on an operator for operating the speed of the mobile object until a predetermined time elapses after the limitation of the speed of the mobile object to the second speed lower than the first speed has been released even if an occupant of the mobile object operates the operator to accelerate the mobile object at the releasing timing.

11. A control device for a mobile object that is able to move both on a roadway and in a predetermined area other than a roadway, the control device comprising:
a road type recognizing unit configured to recognize whether the mobile object is moving on the roadway or in the predetermined area on the basis of an output of a sensing device for sensing an external situation of the mobile object;
a limitation recognizing unit configured to recognize whether the roadway on which the mobile object is moving is a limitation area in which movement of a vehicle in a first direction is permitted and movement of a vehicle in a second direction opposite to the first direction is limited on the basis of the output of the sensing device; and
a control unit configured to control movement of the mobile object on the basis of a recognition result from the road type recognizing unit and a recognition result from the limitation recognizing unit,
wherein the control unit causes the mobile object to move in a first moving mode when the mobile object is moving in the predetermined area other than the roadway,
wherein the control unit causes the mobile object to move in a second moving mode different from the first moving mode when the mobile object is moving on a roadway other than the predetermined area,
wherein the control unit causes the mobile object to move in the first moving mode when the mobile object moves on the roadway, the roadway is the limitation area, and the mobile object is moving in the second direction and causes the mobile object to move in the second moving mode when the mobile object moves on the roadway, the roadway is the limitation area, and the mobile object is moving in the first direction.

12. The control device for the mobile object according to claim 11, wherein a speed limit in the first moving mode is lower than a speed limit in the second moving mode and/or a rate of change of steering per unit time in the first moving mode is less than a rate of change of steering per unit time in the second moving mode.

13. A control method for a mobile object that is performed by a control device for a mobile object that one or more occupants board and that is able to move both on a roadway and in a predetermined area other than a roadway, the control method comprising:
recognizing whether the mobile object is moving on the roadway or in the predetermined area on the basis of an output of a sensing device for sensing an external situation of the mobile object;
recognizing whether the roadway on which the mobile object is moving is a limitation area in which movement of a vehicle in a first direction is permitted and movement of a vehicle in a second direction opposite to the first direction is limited on the basis of the output of the sensing device;
limiting a speed of the mobile object to a first speed when the mobile object moves on the roadway, the roadway is the limitation area, and the mobile object is moving in the first direction; and
limiting the speed of the mobile object to a second speed lower than the first speed when the mobile object moves on the roadway, the roadway is the limitation area, and the mobile object is moving in the second direction.
